# EUROPÄISCHE PATENTSCHRIFT

(11) **EP 0 545 981 B1**
(45) Veröffentlichungstag und Bekanntmachung des Hinweises auf die Patenterteilung: **09.11.1994**
(21) Anmeldenummer: 91914841.1
(22) Anmeldetag: 26.08.1991
(51) Int. Cl.: A61C 19/04, A61C 13/12, A61C 11/00

(54) **VERFAHREN SOWIE MARKIERUNGSVORRICHTUNG ZUR PROJEKTIERUNG ZAHNMEDIZINISCHER KAUFLÄCHEN**
PROCESS AND MARKING DEVICE FOR PROJECTING DENTISTRY MASTICATORY SURFACES IN DENTISTRY
PROCEDE ET DISPOSITIF DE MARQUAGE SERVANT A PROJETER DES SURFACES DE MASTICATION EN MEDECINE DENTAIRE

(30) Priorität: 27.08.1990 DE 9012276 U
(43) Veröffentlichungstag der Anmeldung: 16.06.1993
(73) Patentinhaber: Wall, Giselher, Dr., D-97688 Bad Kissingen (DE)
(72) Erfinder: Wall, Giselher, Dr., D-97688 Bad Kissingen (DE)
(74) Vertreter: KUHNEN, WACKER & PARTNER
(86) Internationale Anmeldenummer: DE9100674
(87) Internationale Veröffentlichungsnummer: WO9203105

(56) Entgegenhaltungen:
- CH-A- 242 243
- FR-A- 1 198 708
- US-A- 4 007 531
- US-A- 4 189 835

## Beschreibung

Die Erfindung betrifft ein Verfahren zur Projektierung zahnmedizinischer Kauflächen gemäß dem Oberbegriff des Anspruchs 1 sowie eine Markierungsvorrichtung zur Projektierung zahnmedizinischer Kauflächen gemäß dem Oberbegriff des Anspruchs 13.

Zahnersatzkronen haben ein dem natürlichen Vorbild entsprechendes Relief von Höckern und Furchen (Fissuren) auf ihrer Kaufläche. Dabei lassen sich zwar für die grob-orientierende Morphologie einer Kaufläche bestimmte Grundsätze aufstellen, anhand derer die Identifikation eines Einzelzahnes recht sicher möglich ist: daß z.B. die Kaufläche eines oberen Backenzahnes vier Höcker trägt bei einem dem Großbuchstaben "H" angenäherten Fissurenbild, während ein unterer Backenzahn bei vier oder fünf Höckern ein Fissurenbild von etwa Kreuzgestalt aufweist. Die topografische Anordnung von Fissur und Höcker auf einer Kaufläche ist jedoch nicht zufällig, oder willkürlich. Vielmehr bedingen sich Höcker- und Fissurenlage zwangsläufig in der Weise, daß unter Kaubetrieb beim Verschieben der unteren Zähne gegen die oberen ein Höcker auf einem Zahn des einen Kiefers in einer seinem Bewegungsumfang entsprechenden Fissur auf der Kaufläche des Gegenzahns läuft. Da der Bewegungsumfang des Unterkiefers wesentlich durch die Mechanik und Biologie des Kiefergelenks mitbestimmt ist, stehen Lage und Form von Fissuren und Kauhöckern eines Kiefers nicht nur mit derjenigen des Gegenkiefers, sondern auch noch mit dem Kiefergelenk in enger funktioneller Beziehung. Wird Zahnersatz diesem Biokonzept der Kauflächengestaltung zuwider hergestellt, können schwerwiegende Störungen der Kaufunktion wie auch der Allgemeingesundheit die Folge sein.

Bei der Herstellung von Zahnersatz werden daher Geräte benutzt, welche entweder nach Mittelwerten, oder auch nach individuellen Meßwerten einstellbar, die beschriebene funktionelle Dreierbeziehung Oberkiefer-Unterkiefer-Kiefergelenk im Labor simulieren lassen. Sie werden Artikulatoren genannt. Bisherige Konzepte einer individuellen Kauflächenmodellation ("Aufwachstechnik") gehen davon aus, daß durch ein zeitaufwendiges Verfahren nach Versuch und Irrtum zunächst die unter Kaubewegungen störungsfreie Position der Kauhöcker ermittelt wird, wonach sich der Fissurenverlauf passiv ergibt und beim Modellieren unter wiederholter Kontrolle frei gehalten werden muß.

Aus der Kiefergelenks- und Artikulatormechanik ist jedoch bekannt, daß die Lage von Längs- und Querfissuren auf zu modellierenden Kauflächen durch Kreisbögen angenähert werden kann, deren Mittelpunkte mit den Condylenmittelpunkten eines verwendeten Artikulators zusammenfallen (Stuart, E.: Gnathologische Zahnpräparation, Quintessenz-Verlags-GmbH, Berlin, (1986). Dem angenäherten Kreisbogen der Querfissuren wird in dieser theoretischen Betrachtung der Drehpunkt des gleichseitigen Artikulator-Condylus zugeordnet - dem angenäherten Kreisbogen der Längsfissuren wird der Drehpunkt des gegenseitigen Artikulator-Condylus zugeordnet.

Der Fissurenverlauf ist vorrangig deshalb der Kreisform nur angenähert, weil der Unterkiefer im Kaubetrieb nicht einfache Rotationen um den Gelenkkopf der Lastseite ausführt, sondern zur Drehbewegung um den Gelenkkopf noch dessen seitliche Verschiebung, also ein Wandern des Drehzentrums, als die sog. Benett-Bewegung hinzukommt. Fissuren als Laufwege für Höcker der Gegenzahnreihe müsssen also auch diese Bewegungskomponente integriert berücksichtigen, damit eine gegenseitige Behinderung der Zahnhöcker ausgeschlossen ist.

Eine einfache mechanische Markierungsvorrichtung, wie etwa einen Zirkel in seiner traditionellen Ausgestaltung zum Anzeichnen derartiger Quer- und Längsfissuren in der Zahntechnik zu verwenden, ist ungeeignet, da eine sichere Abstützung an den entsprechenden Gelenkteilen des verwendeten Artikulators nicht möglich ist, und der Drehpunkt zudem z.T. sehr weit außerhalb der Zeichenebene liegt.

Eine Vorrichtung, wie auch ein Verfahren zur funktionellen Verbesserung der Kauflächen fertiger Prothesen ist aus der Patentschrift CH-A-242243 bekannt. Beabsichtigt ist dort ein unter Funktionsbewegungen günstigerer Zahnreihenschluß durch Ausgestaltung der Kauflächensilhouette von Ober- und Unterkieferzähnen als jeweils genau zueinander passende partielle Globoidkalotte. Ein Anhalt zur individuellen Neugestaltung eines Kauflächenreliefs durch gelenkbezogene Festlegung des Fissurenverlaufs, wie auch davon abhängig der Höckerlage findet sich nicht.

Daher ist es Aufgabe der vorliegenden Erfindung, ein Verfahren sowie eina Markierungsvorrichtung zur Verfügung zu stellen, die es ermöglicht, Quer- und Längsfissuren auf zahnmedizinischen Kauflächen sowohl des Unterkiefer- als auch des Oberkiefermodells mit einfachen Mitteln festzulegen.

Die Lösung dieser Aufgabe erfolgt verfahrenstechnisch durch die Merkmale des Anspruchs 1 und vorrichtungstechnisch durch die Merkmale des Anspruchs 13.

Das erfindungsgemäße Verfahren geht in Umkehrung des klassischen Aufwachskonzeptes davon aus, bei der Projektierung einer Kaufläche primär die freizuhaltenden Laufwege nach Form und Position auf dem wie üblich mit einem Wachsüberzug zum Aufwachsen vorbereiteten Modellstumpf festzulegen. Daneben ist es jedoch auch erfindungsgemäß, eine nach klassischem Vorgehen modellierte Kaufläche abschließend bezüglich ihres Fissurenverlaufes nach den Ansprüchen der Erfindung zu überarbeiten.

Erfindungsgemäß wird ein Verfahren zur Projektierung vorgeschlagen, zahnmedizinischer Kauflächen mittels eines Artikulators, bei dem eine Markierungsvorrichtung mit wenigstens einem Abstützschenkel und wenigstens einem Arbeitsschenkel verwendet wird;
ein definierter Winkel zwischen Abstützschenkel und Arbeitsschenkel eingestellt wird;
die Markierungsvorrichtung derart an einem Gelenkteil des Artikulators abgestützt wird, daß der Drehpunkt der Markierungsvorrichtung am Ort des geometrischen Mittelpunktes einer Condylenkugel auf einer Artikulatorscharnierachse liegt;
an einartikulierten Modellen des Ober- und/oder Unterkiefers Längsfissuren auf Kronenformen durch eine einer Kreisform wenigstens angenäherte Bahnkurve eines äußeren Endes des Arbeitsschenkels mit Zentrum im Mittelpunkt der gegenseitigen Condylenkugel des Artikulatorgelenkes markiert werden; und
Querfissuren auf Kronenformen durch eine einer Kreisform wenigstens angenäherte Bahnkurve des äußeren Endes des Arbeitsschenkels mit Zentrum im Mittelpunkt der gleichseitigen Condylenkugel des Artikulatorgelenkes markiert werden.

Des weiteren erfindungsgemäß ist eine Markierungsvorrichtung zur Projektierung zahntechnischer Kauflächen mittels eines Artikulators, bei der die Markierungsvorrichtung wenigstens einen Abstützschenkel und wenigstens einen Arbeitsschenkel aufweist;
der Arbeitsschenkel in einem definierten Winkel zu dem Abstützschenkel einstellbar ist; und
der Abstützschenkel an seinem äußeren Ende eine Abstützeinrichtung aufweist, welche derart ausgebildet ist, daß sie an einem Gelenkteil eines Artikulatorgelenkes abgestützt werden kann.

Dadurch, daß eine Markierungsvorrichtung mit wenigstens einem Abstützschenkel und wenigstens einem Arbeitsschenkel verwendet wird, zwischen denen ein definierter Winkel eingestellt wird und wobei die Markierungsvorrichtung derart an einem Gelenkteil des verwendeten Artikulators abgestützt wird, daß der Drehpunkt der Markierungsvorrichtung am Ort des geometrischen Mittelpunktes einer Condylenkugel auf einer Artikulatorscharnierachse liegt, wird es ermöglicht, an einartikulierten Modellen des Ober- und/oder Unterkiefers Längsfissuren auf Kronenformen durch eine einer Kreisform wenigstens angenäherte Bahnkurve eines äußeren Endes des Arbeitsschenkels mit Zentrum im Mittelpunkt der gegenseitigen Condylenkugel des Artikulatorgelenkes zu markieren. Zur Ausrichtung des äußeren Endes des Arbeitsschenkels gegenüber einem Modellstumpf ist dieses in einer besonders bevorzugten Ausführungsform der Erfindung in der Achse des Arbeitsschenkels diesem gegenüber verdrehbar angeordnet.

Ferner können Querfissuren auf Kronenformen ebenfalls durch eine einer Kreisform wenigstens angenäherte Bahnkurve des äußeren Endes des Arbeitsschenkels mit Zentrum im Mittelpunkt der gleichseitigen Condylenkugel des Artikulatorgelenkes markiert werden.

Eine derartige Markierung kann beispielsweise eine farbliche Markierung, z. B. aus aufgebrachtem Wachs, sein oder aber eine mechanische Markierung, wie beispielsweise Anreißen, z.B. Anreißen von fissuralen Kreisbogensegmenten auf einer Wachsmodellation einer Kaufläche.

Durch das erfindungsgemäße Verfahren wird es ermöglicht, vorab die Lage des Fissurenmusters beim Modellieren von Zahnkronen festzulegen, so daß quasi einer von zwei Freiheitsgraden hierdurch festgelegt wird und damit zugleich der zweite Freiheitsgrad, nämlich die Ortsbestimmung der Kauflächenhöcker ebenfalls in guter Annäherung festgelegt wird. Dadurch wird das fehlfunktionsfreie Aufmodellieren der Kauflächenhöcker erleichtert, da das Fissurenmuster die Bewegungsbahnen und damit den erforderlichen Raumanspruch der jeweiligen Gegenkieferhöcker als verbotene Zonen vorgibt. Somit wird das klassische Versuch- und Irrtumverfahren durch die vorliegende Erfindung optimiert. Dies bedeutet eine Senkung der Fertigungszeit und -kosten für zahnmedizinische Kronenformen.

Eine Möglichkeit, mit einem konventionellen Zirkel die Aufgabe der vorliegenden Erfindung zumindest annähernd zu lösen, wäre durch Eingriffe am Artikulator zwar selbst denkbar, jedoch müßten im Condylengehäuse wie auch an der Condylenkugel an geeigneter Stelle Lager für die ruhende Zirkelspitze vorgesehen werden. Dies hätte jedoch Nachteile durch Ungenauigkeiten, insofern als der Zirkeldrehpunkt nicht genau am zu fordernden geometrischen Ort plazierbar wäre, sondern bestenfalls um einige Millimeter (Radius der Condylenkugel) daneben.

Eine zirkelartige Vorrichtung, die wenigstens ein Gelenk zwischen Abstützschenkel und Arbeitsschenkel sowie eine an dem Gelenk vorgesehene Führungshilfe aufweist, zu verwenden, hat den Vorteil, daß somit eine einfache mechanische Markierungshilfe zur Verfügung steht, die bei Bedarf manuell an der Führungshilfe zum Markieren der Quer- und Längsfissuren gehandhabt werden kann.

Selbstverständlich kann eine derartige Ausführungsform - neben der manuellen Handhabung - auch maschinell geführt werden, wobei die Führungshilfe an ein die Markierungsvorrichtung führendes Maschinenteil angepaßt werden muß. Denkbar ist hierbei die Verwendung mikroprozessorgesteuerter Robotersysteme zum Führen der Markierungsvorrichtung an der entsprechend umgestalteten Führungshilfe.

Als Gelenkteil des Artikulators ein Condylengehäuse zu verwenden hat den Vorteil, daß die Markierungsvorrichtung bei Ausbildung als Gegengelenkstück, also als Condylus in einem Condylengehäuse eines Artikulators abgestützt werden kann.

Umgekehrt kann vorteilhaft als Gelenkteil des verwendeten Artikulators eine Condylenkugel verwendet werden, so daß das äußere Ende des Abstützschenkels condylengehäuseartig ausgebildet werden kann.

Vorteilhaft wird als Ende des Abstützschenkels zur Abstützung am Condylengehäuse eine Kugel verwendet, die denselben Radius aufweist wie die Condylenkugel des benutzten Artikulators, da diese praktisch die Condylenkugel des Artikulators ersetzt und daher optimal in das Condylengehäuse paßt.

Bei Ausbildung des Abstützschenkels als Halbkugelschale oder Teilkugelkalotte einen Innenradius zu verwenden, der gleich oder kleiner, insbesondere bis zu ca. 20% kleiner ist, als der Radius der Condylenkugel, hat den Vorteil, daß die Markierungsvorrichtung mit dieser Anordnung besonders sicher auf einer Condylenkugel eines Artikulators abgestützt werden kann, wobei die erforderliche Stuart-Geometrie dennoch erhalten bleibt.

Dies ist - bei vermindertem Materialaufwand - ebenso der Fall, wenn die verwendete Teilkugelkalotte zur Abstützung der Condylenkugel des Artikulators auf mindestens drei ihr geometrisch angehörige, untereinander und mit dem äußeren Ende des Abstützschenkels verbundene Punkte reduziert ist.

Besonders vorteilhaft ist eine Markierungsvorrichtung, bei der das äußere Ende des Abstützschenkels als Hohlkugel ausgebildet ist, die in einem senkrecht auf der Schenkelachse stehenden Äquator zerleg- und zusammenfügbar ist, weil eine derartige Hohlkugel bei zusammengefügter Kugel condylengehäuseseitig abgestützt werden kann und bei Abnahme der dem Abstützschenkel abgewandten Halbkugel condylenseitig abgestützt werden kann, so daß mit der vollständigen Hohlkugel Oberkieferfissuren auf Kronenformen markiert werden können, und mit der Teilkalotte in Form einer Halbkugel Unterkieferfissuren auf Kronenformen markiert werden können, so daß für beide Arbeitsschritte lediglich eine einzige besonders ausgebildete Markierungsvorrichtung notwendig ist.

Eine Markierungsspitze, etwa eine Reißnadel, zu verwenden, hat den Vorteil, daß weiches Material, beispielsweise Wachs, einer zu modellierenden Kaufläche mit dieser Markierungsspitze geritzt werden kann, um die Fissuren festzulegen. Die Markierungsspitze ist jedoch auch ausführbar als ein beheizbares Wachsmodellier- oder als ein Wachsschabeinstrument, z. B. von Klingengestalt, das den äußeren Umriß des Fissurenprofils hat. Da die Fissuren der Kauflächen menschlicher Zähne in ihrem Querprofil nicht einfach V-förmige Einschnitte darstellen, ist ihre rein manuelle Ausgestaltung zeitaufwendig. Mit der erfindungsgemäßen Markierungsvorrichtung gelingt es dagegen in besonders einfacher Weise, das entsprechende Querprofil einer Fissur durch Schaben oder Drücken zu erzeugen.

Des weiteren kann die Markierungsspitze als ein drehbares Spannfutter mit einem rotationssymmetrischen Werkzeug ausgebildet sein, welches Verlauf und Profil einer Fissur subtraktiv markiert.

Darüber hinaus eine gegen die Achse des Arbeitsschenkels mit variabler Neigung einstellbare Markierungsspitze zu verwenden, hat den Vorteil, daß die markierungsebenenferne Lage des Drehpunktes der Markierungsvorrichtung kompensiert werden kann. Eine derartige Einstellbarkeit wird beispielsweise durch ein im Bereich des Arbeitsschenkels angebrachtes Scharniergelenk, insbesondere in Verbindung mit einem Torsionsgelenk, erreicht.

Darüber hinaus ist es vorteilhaft, um die markierungsebenenferne Lage des Drehpunktes der Markierungsvorrichtung noch besser zu kompensieren, in ihrer Länge veränderlich einstellbare Abstützschenkel und/oder Arbeitsschenkel zu verwenden. Mit einer derartigen Markierungsvorrichtung können Quer- und Längsfissuren jedes beliebigen Backenzahnes des menschlichen Gebisses für zahntechnische Zwecke festgelegt werden.

Dadurch, daß an dem Abstützschenkel zur simultanen Abtastung eines Benetteinsatzes des Artikulators im Condylengehäuse der Modellationsseite ein weiterer, bevorzugt längenverstellbar ausgeführter Führungsschenkel temporär und um den Abstützschenkel drehbar, beispielsweise mittels eines coaxialen Torsionsgelenks, angefügt wird, kann der Einfluß der sogenannten Benettbewegung berücksichtigt werden. Bei der Benettbewegung handelt es sich um eine laterale Bewegung des Unterkiefers gegen den Oberkiefer während der Kaubewegung. Dabei enden sowohl Abstütz- als auch Führungsschenkel ebenfalls in einer der zugehörigen Condylenkugel des Artikulators größengleichen Kugel. Das Markieren der Quer- und Längsfissuren auf den Kronenformen unter Berücksichtigung der Benettbewegung hat den Vorteil, daß nach Einsetzen der Kronen ein paßgerechtes Gleiten der Kauhöcker in den entsprechend markierten Fissuren während der Kaubewegung gewährleistet ist.

Eine derartige Berücksichtigung der Benettbewegung könnte mit einem Zirkel in traditioneller Ausbildung - neben den einleitend erwähnten Abstützungenauigkeiten - nicht berücksichtigt werden.

Weitere Vorteile und Merkmale der vorliegenden Erfindung ergeben sich aufgrund der Beschreibung eines Ausführungsbeispieles und an Hand der Zeichnung.

Es zeigt:
Fig. 1 eine Ausführungsform einer erfindungsgemäßen Markierungsvorrichtung;
Fig. 2 einen Längsschnitt durch eine besondere Ausführungsform eines äußeren Endes des Abstützschenkels;
Fig. 3 einen Längsschnitt durch ein äußeres Ende einer condylengehäuseseitig abstützbaren Markierungsvorrichtung;
Fig. 4 eine Ausführungsform einer erfindungsgemäßen Markierungsvorrichtung an einem Artikulator;
Fig. 5 eine teilweise Schnittansicht einer Ausführungsform der erfindungsgemäßen Markierungsvorrichtung, welche in der Lage ist, eine Benettverschiebung zu berücksichtigen; und
Fig. 6 eine teilweise Schnittdarstellung einer vollständigen Markierungsvorrichtung, die in der Lage ist, eine Benettverschiebung zu berücksichtigen.

Der Gedanke der Erfindung geht davon aus, daß eine Markierungsvorrichtung, insbesondere eine zirkelartige Markierungsvorrichtung, die zum Markieren, z.B. Anreißen, der fissuralen Kreisbogensegmente auf der Wachsmodellation der Kauflächen dient, nur dann zuverlässig arbeitet, wenn der Kreismittelpunkt des gegebenen Bogens mit dem Drehpunkt der jeweiligen Condylenkugel des Artikulators zusammenfällt.

Erfindungsgemäß wird dies dadurch sichergestellt, daß die geometrischen Beziehungen der Markierungsvorrichtung zum Artikulator jeweils denen zwischen Condylenkugel und Condylengehäuse des Artikulators gleichgestaltet sind.

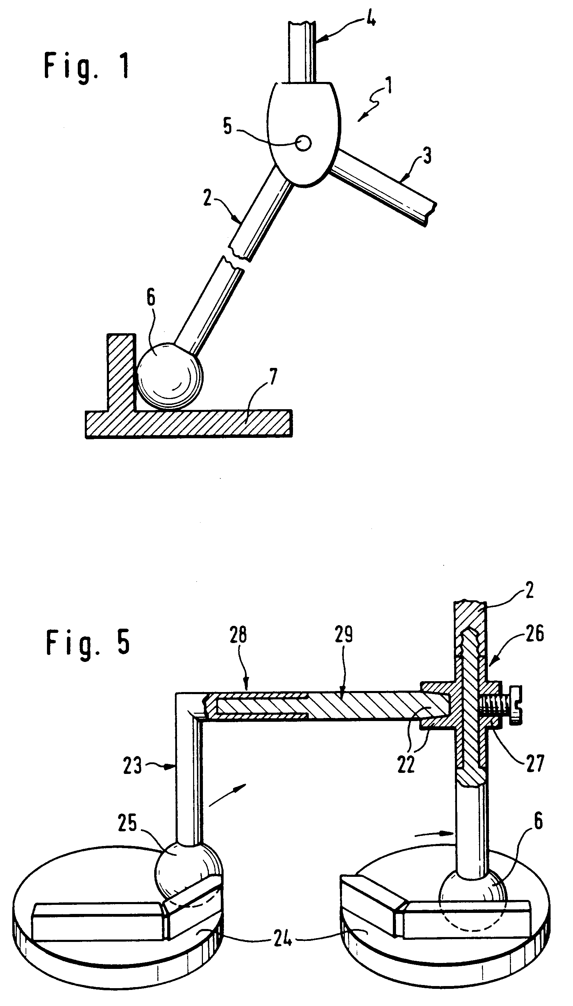

In Fig. 1 ist mit 1 eine Markierungsvorrichtung bezeichnet, mit einem Abstützschenkel 2, einem Arbeitsschenkel 3 sowie einer Führungshilfe 4. Mit der Markierungsvorrichtung 1 kann über das Gelenk 5 ein definierter Winkel zwischen Abstützschenkel 2 und Arbeitsschenkel 3 eingestellt werden. Dieser Winkel hängt von demjenigen Zahn ab, dessen Fissurenmuster festgelegt werden sollen.

Zum Markieren, z.B. Anreißen, der Oberkieferfissuren stützt sich die zirkelartig ausgebildete Markierungsvorrichtung 1 mit ihrem kugelförmig ausgebildeten äußeren Ende 6 des Abstützschenkels 2 in identischer Weise wie die Condylenkugel am Condylengehäuse 7 eines verwendeten Artikulators ab. Drehpunkt der Markierungsvorrichtung 1 und Condylendrehpunkt werden dadurch zur Deckung gebracht, daß das kugelförmige äußere Ende 6 der Markierungsvorrichtung 1 den gleichen Radius aufweist, wie die Condylenkugel des verwendeten Artikulatormodells. Unter diesen Bedingungen zeichnet die Markierungsspitze 8, z.B. eine Reißnadel, der Markierungsvorrichtung 1 die Bewegungsbahn einer Höckerspitze des Gegenkiefers entsprechend dessen relativer reiner Seitwärtsdrehbewegung nach, wenn das kugelförmige äußere Ende 6 ortsfest bleibt. Der erhaltene Kreisbogen läßt bereits relativ genau den für eine störungsfreie Funktion des Höckers erforderlichen Raumbedarf entweder vorab festlegen, oder nachträglich einräumen, so daß ein häufiges, zeitaufwendiges Erproben der regelrechten Funktion nach dem Versuchs- und Irrtumverfahren während der Modellation entfallen kann.

Zum Markieren bzw. Anreißen der Unterkieferfissuren trägt die Markierungsvorrichtung 1 am äußeren Ende des Abstützschenkels 2 anstelle der Kugel 6 eine Teilkugel- bis höchstens Halbkugelkalotte 9 mit einem Innendurchmesser, der dem Durchmesser der Condylenkugel 10 des verwendeten Artikulatormodells gleich oder kleiner, im Beispielsfalle ca. 20% kleiner ist. Bei Gleichheit der Durchmesser läuft die Teilkugelkalotte 9 im Flächenschluß auf der Condylenkugel 10 des Artikulators, bei einem Teilkugelkalotteninnendurchmesser ist die Berührungszone ein Kleinkreis, wobei die Abstützung jedoch sicher bleibt, wenn die Durchmesser nur gering voneinander abweichen, der Berührungskreis also möglichst groß ist. Dabei bleibt auch der Mittelpunkt der Condylenkugel 10 als Drehpunkt für die Markierungsvorrichtung, beispielhaft einem Zirkel, stabil erhalten. Wird die Teilkugelkalotte 9 im Durchmesser größer als die Condylenkugel 10 ausgebildet, so wird die Abstützung unstabil, da nur annähernd punktförmige Berührungszonen zwischen beiden auftreten und der Drehpunkt der Markierungsvorrichtung, insbesondere der Zirkeldrehpunkt, dann nicht mehr zwangsläufig im Mittelpunkt der Condylenkugel 10 liegt, sondern im Extremfall sich unkontrolliert auf die Oberfläche der Condylenkugel 10 verlagern kann.

Eine bevorzugte Ausführungsform der Teilkugelkalotte 9 liegt darin, daß eine derartige Teilkugelkalotte auf mindestens drei ihr geometrisch angehörige, untereinander und mit dem äußeren Ende des Abstützschenkels 2 verbundene Punkte reduziert werden kann. Eine derartige Ausführungsform weist sämtliche Vorteile der flächig ausgebildeten Teilkugelkalotte 9 auf.

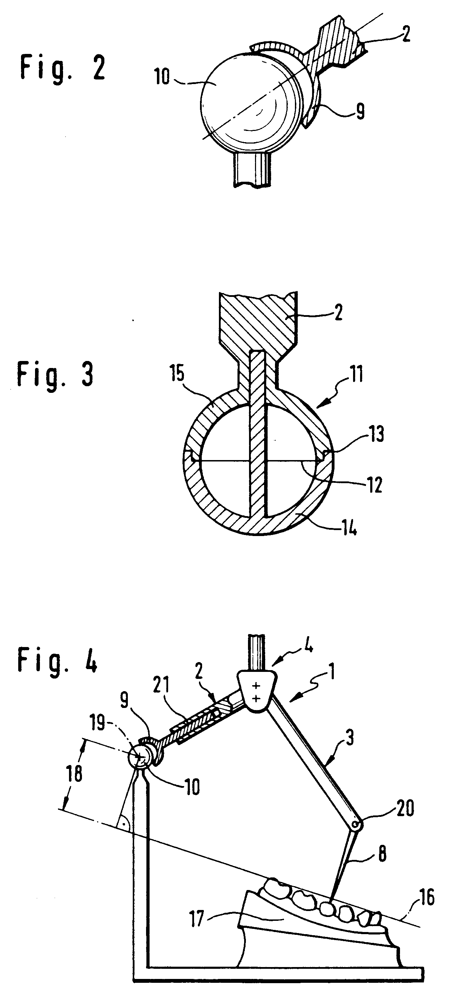

Eine besondere Ausführungsform gemäß Fig. 3 der vorliegenden Markierungsvorrichtung 1 trägt an ihrem äußeren Ende ihres Abstützschenkels 2 eine Hohlkugel 11, welche in einem auf der Achse des Abstützschenkels 2 senkrecht stehenden Äquator 12 in einem Verschlußmechanismus 13, beispielsweise ein Gewinde reversibel zerleg- und zusammenfügbar ist.

Als Verschlußmechanismus 13 kann jedoch ebenso ein Steck- oder ein Bajonettverschluß verwendet werden.

Zu Arbeiten im Oberkiefermodell wird die Markierungsvorrichtung mit zusammengesetzter Hohlkugel 11 benutzt, zu Unterkieferarbeiten dagegen wird die untere Hemisphäre 14 der Hohlkugel 11 abgenommen und der Abstützschenkel 2 mit der verbleibenden Teilkugelkalotte 15 an einer Condylenkugel 10 eines Artikulators abgestützt. Der Innendurchmesser der Teilkugelkalotte 15 liegt dabei zwangsläufig um die doppelte Wandstärke der Hohlkugel 11 unter demjenigen der Condylenkugel 10, was aber nach den weiter oben gegebenen Erläuterungen für die geometrische Wirksamkeit der erfindungsgemäßen Markierungsvorrichtung, insbesondere nach Art eines Zirkels, günstig und von besonderer Bedeutung für die Stabilität der Abstützung ist.

Während die Okklusionsebene 16 gemäß Fig. 4 eines einartikulierten Oberkiefermodells meist nur um praktisch vertretbare Beträge vom Drehpunkt der Markierungsvorrichtung 1 im Condylengehäuse entfernt ist, ist die Entfernung 18 des Drehpunktes 19 im Mittelpunkt der Condylenkugel 10 für Anreißarbeiten auf dem Unterkiefermodell 17 in der Regel zu groß, um noch eine bequeme Handhabung der zirkelartigen Markierungsvorrichtung 1 mit gleichlangen geraden und unveränderlichen Schenkeln zu erlauben. In den meisten Fällen kann das Problem durch eine Einwärtsneigung der Markierungsspitze 8, beispielsweise eine Reißnadel, in einem zweiten Gelenk 20 gegen die Längsachse des Arbeitsschenkels 3 kompensiert werden. Universelle Anwendbarkeit gewinnt die erfindungsgemäße Markierungsvorrichtung jedoch dadurch, daß mindestens ein Schenkel, z.B. durch einen friktiv selbsthaftenden Teleskopauszug 21 in seiner Länge variabel einstellbar ist. Im Regelfall der Problemsituation muß der Abstützschenkel 2 bei Arbeiten am Unterkiefermodell 17 gegenüber dem wandernden Arbeitsschenkel 3 relativ kürzer eingestellt werden.

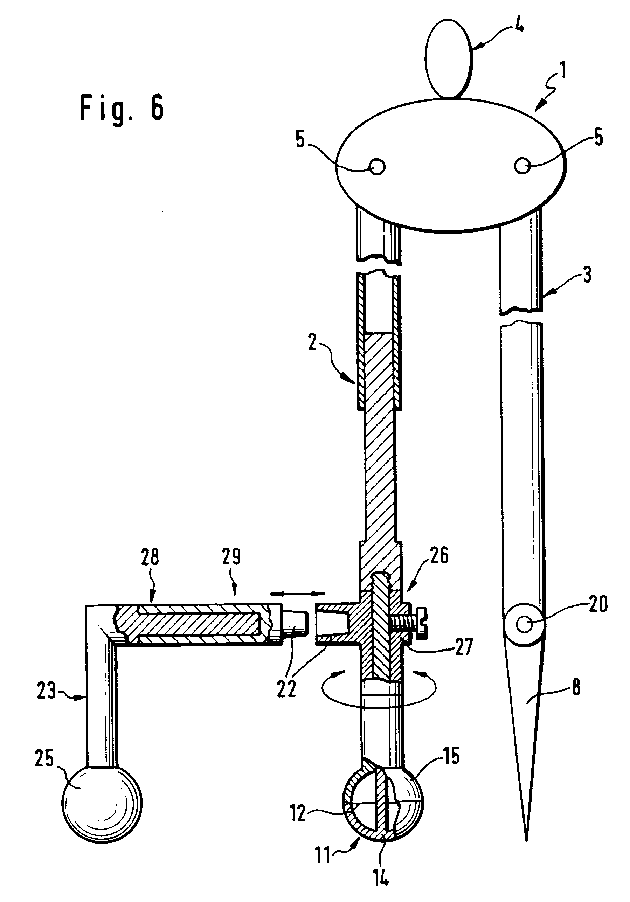

Die Figuren 5 und 6 zeigen eine Ausführungsform der erfindungsgemäßen Markierungsvorrichtung, durch welche eine Berücksichtigung der Lateralbewegung, der sogenannten Benettbewegung, des Unterkiefers, gegen den Oberkiefer berücksichtigt werden kann, so daß die Gestaltung des Fissurenmusters zusätzlich präzisierbar ist. Bei primärer Oberkiefermodellation ist durch simultanes Nachfahren der Benett'schen Seitwärtsverschiebung mit Hilfe eines dritten in einer Steckfassung 22 temporär anfügbaren Führungsschenkels 23 an einem Benetteinsatz des Condylengehäuses 24 zusammen mit der Drehung der Markierungsvorrichtung 1 auch die Benettbewegung in den Fissurenverlauf integrierbar. Dabei hat das äußere Ende 25 des Führungsschenkels 23 ebenfalls Kugelgestalt von der Größe der Condylenkugel des benutzten Artikulators. Da bei der Abtastmanipulation der beim klassischen Zirkel "ruhende" Schenkel ebenfalls über einige Millimeter vom Führungsschenkel 23 verschoben wird, wird der Ausdruck "Abstützschenkel" für denjenigen Zirkelschenkel gewählt, um welchen herum die Drehbewegung stattfindet. Die Verbindung 26 des Führungsschenkels 23 mit dem Abstützschenkel 2 ist um die Längsachse des Abstützschenkels 2 bevorzugt feststellbar oder selbsthemmend als eine Hülse 27 um die Achse des Abstützschenkels 2 drehbar. Diese Drehbarkeit wird im Beispielsfall durch ein nicht näher gezeigtes coaxiales Torsionsgelenk gewährleistet. Damit ist eine Einstellung der unterschiedlichen Entfernungen zwischen einer anzuzeichnenden Kaufläche, insbesondere einer Kronenform, und dem Ruhepunkt der Kugel 25 des Führungsschenkels 23 möglich. Eine Teleskopführung 28 in einem Verbindungsschenkel 29 dient zum Abgleich unterschiedlicher individueller transversaler Condylendistanzen. Eine Längenverstellbarkeit des Abstützschenkels 2 wird durch einen Teleskopauszug bewirkt.

## Patentansprüche

1. Verfahren zur Projektierung zahnmedizinischer Kauflächen auf einem einartikulierten Zahnstumpfmodell mittels eines Artikulators, wobei eine Markierungsvorrichtung (1) mit wenigstens einem Abstützschenkel (2) und wenigstens einem Arbeitsschenkel (3) verwendet wird, und ein definierter Winkel, abhängig von demjenigen Zahn, dessen Fissurenmuster festgelegt werden sollen, zwischen Abstützschenkel (2) und Arbeitsschenkel (3) eingestellt wird,
dadurch gekennzeichnet, daß
die Markierungsvorrichtung (1) derart an einem Gelenkteil des Artikulators abgestützt wird, daß der Drehpunkt der Markierungsvorrichtung (1) am Ort des geometrischen Mittelpunktes einer Condylenkugel (10) auf einer Artikulatorscharnierachse liegt;
auf den einartikulierten Modellen des Ober- und/oder Unterkiefers (17) Längsfissuren auf Kronenformen durch eine einer Kreisform wenigstens angenäherte Bahnkurve eines äußeren Endes des Arbeitsschenkels (2) mit Zentrum im Mittelpunkt der gegenseitigen Condylenkugel des Artikulatorgelenkes markiert werden; und daß
Querfissuren auf Kronenformen durch eine einer Kreisform wenigstens angenäherte Bahnkurve des äußeren Endes des Arbeitsschenkels (2) mit Zentrum im Mittelpunkt der gleichseitigen Condylenkugel (10) des Artikulatorgelenkes markiert werden.

2. Verfahren nach Anspruch 1, dadurch gekennzeichnet, daß als Markierungsvorrichtung (1) eine zirkelartige Vorrichtung verwendet wird; mit wenigstens einem ersten Gelenk (5) zwischen Abstützschenkel (2) und Arbeitsschenkel (3); sowie einer an dem Gelenk (5) vorgesehenen Führungshilfe (4).

3. Verfahren nach Anspruch 1 oder 2, dadurch gekennzeichnet, daß als Gelenkteil des Artikulators ein Condylengehäuse (7) oder Condylenlager oder Condylenkäfig verwendet wird.

4. Verfahren nach Anspruch 1 oder 2, dadurch gekennzeichnet, daß als Gelenkteil des Artikulators eine Condylenkugel (10) verwendet wird.

5. Verfahren nach einem der Ansprüche 1 bis 4, dadurch gekennzeichnet, daß als Ende des Abstützschenkels (2) zur Abstützung am Condylengehäuse (7) eine Kugel (6) verwendet wird, die denselben Radius aufweist, wie die Condylenkugel (10) des benutzten Artikulators.

6. Verfahren nach einem der Ansprüche 1 bis 5, dadurch gekennzeichnet, daß zur Abstützung des Abstützschenkels (2) auf der Condylenkugel (10) des Artikulators eine Halbkugelschale oder eine Teilkugelkalotte (9) als äußeres Ende des Abstützschenkels (2) verwendet wird, deren Innenradius gleich oder kleiner, insbesondere bis zu ca. 20 % kleiner ist, als der Radius der Condylenkugel (10).

7. Verfahren nach Anspruch 6, dadurch gekennzeichnet, daß die Teilkugelkalotte (9) auf mindestens drei ihr geometrisch angehörige, untereinander und mit dem äußeren Ende des Abstützschenkels (2) verbundene Punkte reduziert wird.

8. Verfahren nach einem der Ansprüche 1 bis 7, dadurch gekennzeichnet, daß als äußeres Ende des Abstützschenkels (2) eine Hohlkugel (11) verwendet wird, die in einem senkrecht auf der Schenkelachse stehenden Äquator (12) zerleg- und zusammenfügbar ist, wodurch die Markierungsvorrichtung (1)bei zusammengefügter Kugel (11) condylengehäuseseitig am verwendeten Artikulator abgestützt werden kann, um Quer- und/oder Längsfissuren für Kronenformen an einem mit dem Condylengehäuse (7) oder Condylenlager oder Condylenkäfig verbundenen Modell zu markieren.

9. Verfahren nach einem der Ansprüche 1 bis 7, dadurch gekennzeichnet, daß als äußeres Ende des Abstützschenkels (2) eine Hohlkugel (11) verwendet wird, die in einem Äquator (12) zerleg- und zusammenfügbar ist, wodurch die Markierungsvorrichtung (1) nach Abnahme der dem Abstützschenkel (2) abgewandten Halbkugel condylenseitig am verwendeten Artikulator abgestützt werden kann, um Quer- und/oder Längsfissuren für Kronenformen auf einem mit der Condylenkugel (10) verbundenen Modell zu markieren.

10. Verfahren nach einem der Ansprüche 1 bis 9, dadurch gekennzeichnet, daß als äußeres Ende des Arbeitsschenkels (2) eine Markierungsspitze (8) verwendet wird, die gegen dessen Achse mit variabler Neigung und Torsion einstellbar ist, um die markierungsebenenferne Lage des Drehpunktes der Markierungsvorrichtung zu kompensieren.

11. Verfahren nach einem der Ansprüche 1 bis 10, dadurch gekennzeichnet, daß als ein Mittel zur Kompensation der markierungsebenenfernen Lage des Drehpunktes der Markierungsvorrichtung (1) ein in seiner Länge veränderlich einstellbarer Abstützschenkel (2) und/oder Arbeitsschenkel (3) verwendet wird.

12. Verfahren nach einem der Ansprüche 1 bis 11, dadurch gekennzeichnet, daß an dem Abstützschenkel (2) zur simultanen Abtastung eines Benetteinsatzes des Artikulators im Condylengehäuse (24) der Modellationsseite ein weiterer, bevorzugt längenverstellbar ausgeführter Führungsschenkel (23) temporär und um den Abstützschenkel (2) drehbar und arretierbar angefügt wird, und welcher ebenfalls in einer der zugehörigen Condylenkugel des Artikulators größengleichen Kugel (25) endet.

13. Markierungsvorrichtung zur Projektierung zahntechnischer Kauflächen auf einem einartikulierten Zahnstumpfmodell mittels eines Artikulators, wobei die Markierungsvorrichtung (1) wenigstens einen Abstützschenkel (2) und wenigstens einen Arbeitsschenkel (3) aufweist; und der Arbeitsschenkel (3) in einem definierten Winkel, abhängig von demjenigen Zahn, dessen Fissurenmuster festgelegt werden sollen, zu dem Abstützschenkel (2) einstellbar ist; und der Abstützschenkel (2) an seinem äußeren Ende eine Abstützeinrichtung aufweist, dadurch gekennzeichnet, daß
die Abstützeinrichtung derart ausgebildet ist, daß sie an einem zugehörigen Gelenkteil eines Artikulatorgelenkes analog einem anderen, zugehörigen Gelenkteil abgestützt werden kann.

14. Markierungsvorrichtung nach Anspruch 13, dadurch gekennzeichnet, daß sie zirkelartig ausgebildet ist; mit wenigstens einem ersten Gelenk (5) zwischen Abstützschenkel (2) und Arbeitsschenkel (3); sowie einer an dem Gelenk (5) vorgesehenen Führungshilfe (4).

15. Markierungsvorrichtung nach Anspruch 13 oder 14, dadurch gekennzeichnet, daß das äußere Ende des Abstützschenkels (2) zur Abstützung am Condylengehäuse (7) in der Ausführungsform als Kugel (6) mit demselben Radius ausgebildet ist, den die Condylenkugel (10) des Artikulators aufweist; und zur Abstützung auf der Condylenkugel (10) in der Ausführungsform als Halbkugelschale oder Teilkugelkalotte (9) ausgebildet ist, wobei deren Innenradius gleich oder kleiner, insbesondere bis zu etwa 20% kleiner, als der Radius der Condylenkugel (10) ist.

16. Markierungsvorrichtung nach Anspruch 13 bis 15, dadurch gekennzeichnet, daß die Teilkugelkalotte (9) auf mindestens drei ihr geometrisch angehörige, untereinander und mit dem Abstützschenkel (2) verbundene Punkte reduziert ausgebildet ist.

17. Markierungsvorrichtung nach Anspruch 13 bis 16, dadurch gekennzeichnet, daß das äußere Ende des Abstützschenkels (2) als Hohlkugel (11) ausgebildet ist, die in einem senkrecht auf der Achse des Abstützschenkels (2) stehenden Äquator (12) zerleg- und zusammenfügbar ist, wodurch die Markierungsvorrichtung (1) bei zusammengefügter Kugel (11) condylengehäuseseitig zum Markieren der Oberkieferfissuren abstützbar ist; und
nach Abnahme der dem Abstützschenkel abgewandten Halbkugel (14) condylenkugelseitig am Artikulator zum Markieren der Unterkieferfissuren abstützbar ist.

18. Markierungsvorrichtung nach Anspruch 13 bis 17, dadurch gekennzeichnet, daß das äußere Ende des Arbeitsschenkels (3) gegen dessen Achse mit variabler Neigung über ein zweites Gelenk (20) einstellbar ist, um die markierungsebenenferne Lage des Drehpunktes der Markierungsvorrichtung (1) zu kompensieren.

19. Markierungsvorrichtung nach Anspruch 13 bis 18, dadurch gekennzeichnet, daß als ein weiteres Mittel zur Kompensation der markierungsebenenfernen Lage des Drehpunktes der Markierungsvorrichtung (1) der Abstützschenkel (2) und/oder Arbeitsschenkel (3) in seiner Länge veränderlich einstellbar ist.

20. Markierungsvorrichtung nach Anspruch 13 bis 19, dadurch gekennzeichnet, daß an dem Abstützschenkel (2) ein weiterer, insbesondere längenverstellbar ausgebildeter Führungsschenkel (23) temporär und um den Abstützschenkel (2) coaxial drehbar und arretierbar angeordnet ist, welcher in einer der zugehörigen Condylenkugel größengleichen Kugel (25) endet und zur simultanen Abtastung eines Benetteinsatzes im Condylengehäuse (24) der Modellationsseite dient.

21. Markierungsvorrichtung nach Anspruch 13 bis 20, dadurch gekennzeichnet, daß das äußere Ende des Arbeitsschenkels (3) nadelförmig ausgebildet ist.

22. Markierungsvorrichtung nach Anspruch 13 bis 21, dadurch gekennzeichnet, daß das Gelenkteil des Artikulatorgelenkes eine Condylenkugel (10) ist.

23. Markierungsvorrichtung nach Anspruch 13 bis 21, dadurch gekennzeichnet, daß das Gelenkteil des Artikulatorgelenkes ein Condylengehäuse (7) oder ein Condylenlager oder ein Condylenkäfig ist.

## Claims

1. Method for projecting odontological masticatory surfaces on a model of a tooth stump in its relative occlusal position by means of an articulator, with a marking device (1) comprising at least one support leg (2) and at least one work leg (3) being used, and a defined angle being set between support leg (2) and work leg (3) in accordance with the tooth for which the fissuration patterns are to be determined,
characterised in that
said marking device (1) is supported against a joint element of said articulator such that the pivot of said marking device (1) is located in the geometrical center of a condyle ball (10) on a hinge axis of said articulator;
on the models of upper and/or lower jaw (17) in their relative occlusal positions, longitudinal fissures on crown molds are marked by means of a path curve of an outer end of said work leg (2) at least approximating a circular shape and having its center in the center point of the condyle ball on the opposite side of said articulator joint; and that
transversal fissures on crown molds are marked by means of a path curve of the outer end of said work leg (2) at least approximating a circular shape and having its center in the center point of the condyle ball (10) on the same side of said articulator joint.

2. Method according to claim 1, characterised in that a compass-like device is used as a marking device (1); having at least one first joint (5) between support leg (2) and work leg (3); and having an auxiliary guide (4) provided on said joint (5).

3. Method according to claim 1 or 2, characterised in that a condyle housing (7), or a condyle bearing, or a condyle cage is used as the joint element of said articulator.

4. Method according to claim 1 or 2, characterised in that a condyle ball (10) is used as the joint element of said articulator.

5. Method according to any one of claims 1 through 4, characterised in that a ball (6) having the same radius as the condyle ball (10) of the articulator used is used as a termination of said support leg (2) for supporting it against said condyle housing (7).

6. Method according to any one of claims 1 through 5, characterised in that a hemispherical cup or a cap-shaped partial sphere (9) is used as the outer end of said support leg (2) to support said support leg (2) against said condyle ball (10) of said articulator, with its inner radius being the same as the radius of said condyle ball (10) or smaller, in particular up to 20 % smaller.

7. Method according to claim 6, characterised in that said cap-shaped partial sphere (9) is reduced to at least three points geometrically appertaining to it and connected with each other and with the outer end of said support leg (2).

8. Method according to any one of claims 1 through 7, characterised in that a hollow sphere (11) capable of being disassembled and assembled in an equator (12) perpendicular with the axis of said support leg (2) is used as the outer end of said support leg (2), whereby the marking device (1) may be supported against the articulator used on the side of the condyle housing (11) when said sphere (11) is in the assembled state, in order to mark transversal and/or longitudinal fissures for crown molds on a model which is connected to said condyle housing (7), or said condyle bearing, or said condyle cage.

9. Method according to any one of claims 1 through 7, characterised in that a hollow sphere (11) capable of being disassembled and assembled in an equator (12) is used as the outer end of said support leg (2), whereby the marking device (1) may be supported against the articulator used on the side facing the condyle after the hemisphere facing away from said support leg (2) was removed, in order to mark transversal and/or longitudinal fissures for crown molds on a model which is connected to said condyle ball (10).

10. Method according to any one of claims 1 through 9, characterised in that, as the outer end of said work leg (2), a marker point (8) is used which is adjustable relative to the axis of said leg such as to have a variable inclination and torsion in order to compensate the position of the pivot of said marking device at a distance from a plane of marking.

11. Method according to any one of claims 1 through 10, characterised in that a support leg (2) and/or a work leg (3) having a variably adjustable length is used as a means for compensating the position of the pivot of said marking device (1) at a distance from a plane of marking.

12. Method according to any one of claims 1 through 11, characterised in that a further guiding leg (23) preferably designed such as to have an adjustable length is attached to said support leg (22) temporarily and in such a manner as to be capable of being pivoted around it and locked for simultaneously scanning a Benett insert of said articulator in the condyle housing (24) of the molding side, said guiding leg (23) also terminating in a ball (25) having the same size as the associated condyle ball of said articulator.

13. Marking device for projecting odontological masticatory surfaces on a model of a tooth stump in its relative occlusal position by means of an articulator, said marking device (1) comprising at least one support leg (2) and at least one work leg (3); and said work leg (3) being adjustable at a defined angle relative to said support leg (2) in accordance with the tooth for which the fissuration patterns are to be determined; and said support leg (2) comprising a support means on its outer end, characterised in that
said support means is formed such that it may be supported against an associated joint element of an articulator joint in analogy with another associated joint element.

14. Marking device according to claim 13, characterised in that it is designed like a compass; having at least one first joint (5) between support leg (2) and work leg (3); and an auxiliary guide (4) provided on said joint (5).

15. Marking device according to claim 13 or 14, characterised in that the outer end of said support leg (2) for supporting it against the condyle housing (7), in its embodiment as a ball (6), is formed to have the same radius as the one of the condyle ball (10) of said articulator; and for supporting it against said condyle ball (10), it is formed in its embodiment of a hemispherical cup or cap-shaped partial sphere (9) the inner radius of which is equal to, or smaller than, the radius of said condyle ball (10), in particular up to 20 % smaller.

16. Marking device according to claims 13 through 15, characterised in that said cap-shaped partial sphere (9) is formed such as to be reduced to at least three points geometrically appertaining to it and connected with each other and with said support leg (2).

17. Marking device according to claims 13 through 16, characterised in that the outer end of said support leg (2) is formed as a hollow sphere (11) capable of being disassembled and assembled in an equator (12) perpendicular with the axis of said support leg (2), whereby the marking device (1) can be supported against the side of the condyle housing when said sphere (11) is in the assembled state, in order to mark the maxillary fissures; and
can be supported against the articulator on the side of the condyle ball for marking the mandibular fissures after the hemisphere (14) facing away from said support leg was removed.

18. Marking device according to claims 13 through 17, characterised in that the outer end of said work leg (3) is adjustable relative to its axis through a second joint (20) such as to have a variable inclination, in order to compensate the position of the pivot of said marking device (1) at a distance from a plane of marking.

19. Marking device according to claims 13 through 18, characterised in that as a further means for compensating the position of the pivot of said marking device (1) at a distance from a plane of marking, the length of said support leg (2) and/or said work leg (3) is variably adjustable.

20. Marking device according to claims 13 through 19, characterised in that a further guiding leg (23) particularly formed such as to have an adjustable length is attached to said support leg (2) temporarily and in such a manner as to be capable of being co-axially pivoted around it and locked, said guiding leg (23) also terminating in a ball (25) having the same size as the associated condyle ball and serving for simultaneously scanning a Benett insert in said condyle housing (24) of the molding side.

21. Marking device according to claims 13 through 20, characterised in that the outer end of said work leg (3) has the shape of a needle.

22. Marking device according to claims 13 through 21, characterised in that the joint element of said articulator joint is a condyle ball (10).

23. Marking device according to claims 13 through 21, characterised in that the joint element of said articulator joint is a condyle housing (7), or a condyle bearing, or a condyle cage.

## Revendications

1. Procédé pour projeter des surfaces de mastication médicodentaires sur une maquette de moignon dentaire en position d'occlusion correcte moyennant un articulateur, un dispositif de marquage (1) comportant au moins une branche d'appui (2) et au moins une branche de travail (3) étant utilisé, et un angle défini en fonction de la dent dont la fissuration spécifique doit être déterminée étant réglé entre la branche d'appui (2) et la branche de travail (3),
caractérisé en ce que
le dispositif de marquage (1) s'appuie contre une pièce articulée de l'articulateur de manière à ce que le point de rotation du dispositif de marquage (1) se trouve au lieu du centre géométrique d'une bille condylique (10) sur un axe de charnière de l'articulateur;
sur les maquettes en position d'occlusion correcte de la mâchoire supérieure et/ou inférieure (17) les fissures longitudinales sur des formes de couronnes sont marquées par une courbe de trajectoire qui a au moins approximativement la forme d'un cercle que décrit une extrémité extérieure de la branche de travail (2) et qui a pour centre le centre de la bille condylique opposée de l'articulation de l'articulateur; et que
des fissures transversales sur des formes de couronnes sont marquées par une courbe de trajectoire qui a au moins approximativement la forme d'un cercle que décrit une extrémité extérieure de la branche de travail (2) et qui a pour centre le centre de la bille condylique (10) du même côté de l'articulation de l'articulateur.

2. Procédé selon la revendication 1, caractérisé en ce qu'est utilisé comme dispositif de marquage (1) un dispositif à la manière d'un compas; avec au moins une première articulation entre la branche d'appui (2) et la branche de travail (3); ainsi qu'un dispositif auxiliaire de guidage (4) prévu sur l'articulation (5).

3. Procédé selon les revendications 1 ou 2, caractérisé en ce qu'on utilise comme pièce articulée de l'articulateur un boîtier de condyle (7) un palier ou une cage de condyle.

4. Procédé selon les revendications 1 ou 2, caractérisé en ce qu'une bille condylique (10) est utilisée comme pièce articulée de l'articulateur.

5. Procédé selon l'une quelconque des revendications 1 à 4, caractérisé en ce qu'on utilise comme extrémité de la branche d'appui (2) pour l'appui contre le boîtier de condyle (7) une bille (6) qui présente le même rayon que la bille condylique (10) de l'articulateur utilisé.

6. Procédé selon l'une quelconque des revendications 1 à 5, caractérisé en ce qu'est utilisee pour l'appui de la branche d'appui (2) sur la bille condylique (10) de l'articulateur une coque hémisphérique ou une calotte sphérique partielle (9) comme extrémité extérieure de la branche d'appui (2), dont le diamètre intérieur est égal ou inférieur, notamment au maximum d'environ 20% inférieur au rayon de la bille condylique (10).

7. Procédé selon la revendication 6, caractérisé en ce que la calotte sphérique partielle (9) est réduite à au moins trois points lui appartenant géométriquement, reliés entre eux et avec l'extrémité extérieure de la branche d'appui (2).

8. Procédé selon l'une quelconque des revendications 1 à 7, caracterise en ce qu'est utilisée comme extremite extérieure de la branche d'appui (2) une bille creuse (11) qui peut être décomposée et assemblée en un équateur (12) situé perpendiculairement sur l'axe de la branche (2), par quoi le dispositif de marquage (1) peut être appuyé du côté du boîtier du condyle contre l'articulateur utilisé lorsque la bille (11) est assemblée, pour marquer des fissures transversales et/ou longitudinales pour des formes de couronnes sur une maquette reliée au boîtier de condyle (7) ou au palier de condyle ou à la cage de condyle.

9. Procédé selon l'une quelconque des revendications 1 à 7, caracterisé en ce qu'est utilisée comme extrémité extérieure de la branche d'appui (2) une bille creuse (11) qui peut être décomposée et assemblée dans un équateur (12), par quoi le dispositif de marquage (1) peut être appuyé, après l'élimination de l'hémisphère détournée de la branche d'appui (2), du côté du condyle contre l'articulateur utilisé pour marquer sur une maquette reliée à la bille condylique (10) des fissures transversales et/ou longitudinales pour des formes de couronnes.

10. Procédé selon l'une quelconque des revendications 1 à 9, caractérisé en ce qu'est utilisée comme extrémité extérieure de la branche d'appui (2) une pointe de marquage (8) qui est réglable par rapport à l'axe de cette dernière en inclinaison et torsion variables pour compenser la position éloignée par rapport au plan de marquage du point de rotation du dispositif de marquage.

11. Procédé selon l'une quelconque des revendications 1 à 10, caractérisé en ce qu'est utilisée comme moyen de compensation de la position éloigneé des plans de marquage du point de rotation du dispositif de marquage (1) une branche d'appui (2) et/ou une branche de travail (3) variables en longueur.

12. Procédé selon l'une quelconque des revendications 1 à 11, caracterisé en ce qu'est apposée temporairement et de manière à pouvoir tourner et à être arrêtée autour de la branche d'appui (2) une branche de guidage (23) supplémentaire, de préférence en version réglable en longueur, en vue du balayage simultané d'un insert Benett de l'articulateur dans le boîtier de condyle (24) du côté de la modèlisation, laquelle branche de guidage se terminant également dans une bille (25) de dimension identique à la bille condylique associée de l'articulateur.

13. Dispositif de marquage pour projeter des surfaces de mastication technico-dentaires sur une maquette de moignon dentaire en position d'occlusion correcte moyennant un articulateur, le dispositif de marquage (1) présentant au moins une branche d'appui (2) et au moins une branche de travail (3); la branche de travail (3) étant réglable à un angle défini, en fonction de la dent dont la fissuration spécifique doit être déterminée, par rapport à la branche d'appui (2); et la branche d'appui présentant à son extrémité extérieure un dispositif d'appui, caractérisé en ce que
le dispositif d'appui est formé de manière à ce qu'il puisse être appuyé contre une pièce articulée associée d'une articulation d'un articulateur par analogie à une autre pièce articulée associèe.

14. Dispositif de marquage selon la revendication 13, caractérisé en ce qu'il est formé à la manière d'un compas; comportant au moins une première articulation (5) entre la branche d'appui (2) et la branche de travail (3); ainsi qu'un dispositif auxiliaire de guidage (4) prévu sur l'articulation (5).

15. Dispositif de marquage selon les revendications 13 ou 14, caractérisé en ce que l'extrémité extérieure de la branche d'appui (2) destinée à s'appuyer contre le boîtier de condyle (10) est conçue dans sa forme d'exécution en tant que bille (6) ayant le même rayon que celui de la bille condylique (10) de l'articulateur; et pour s'appuyer sur la bille condylique (10), elle est conçue dans sa forme d'exécution comme coque hémisphérique ou comme calotte sphérique partielle (9), son rayon intérieur étant identique ou inférieur, notamment, au maximum, d'environ 20% inférieur au rayon de la bille condylique (10).

16. Dispositif de marquage selon les revendications 13 à 15, caracterisé en ce que la calotte sphérique partielle (9) est formée de manière réduite à trois points lui appartenant géométriquement, reliés entre eux et à la branche d'appui (2).

17. Dispositif de marquage selon les revendications 13 à 16, caractérisé en ce que l'extrémité de la branche d'appui (2) est formée comme bille creuse (11) qui peut être décomposée et rassemblée en un équateur (12) situé perpendiculairement sur l'axe de la branche (2), par quoi le dispositif de marquage (1) peut être appuyé du côté du boîtier du condyle, la bille étant assemblée, pour marquer les fissures de la mâchoire supérieure; et
qui après l'élimination de l'hémisphère (14) détournée de la branche d'appui peut être appuyée contre l'articulateur du côté de la bille condylique pour marquer les fissures de la mâchoire inférieure.

18. Dispositif de marquage selon les revendications 13 à 17, caractérisé en ce que l'extrémité extérieure de la branche de travail (3) est réglable par rapport à l'axe de cette dernière, avec une inclinaison variable, moyennant une deuxième articulation (20) pour compenser la position éloignée par rapport au plan de marquage du point de rotation du dispositif de marquage (1).

19. Dispositif de marquage selon les revendications 13 à 18, caractérisé en ce qu'en tant que moyen supplémentaire pour compenser la position éloignée par rapport au plan de marquage du point de rotation du dispositif de marquage (1), la branche d'appui (2) et/ou la branche de travail (3) sont réglables en longueurs variables.

20. Dispositif de marquage selon les revendications 13 à 19, caractérisé en ce qu'est disposée sur la branche d'appui, temporairement et de manière à pouvoir tourner coaxialement autour de la branche d'appui (2) et à être arrêtée, une branche de guidage (23) formée notamment de manière à être réglable en longueur, laquelle branche se termine dans une bille (25) de dimension identique à la bille condylique associée et qui sert au balayage simultané d'un insert Benett dans le boîtier de condyle (24) du côté de la modèlisation.

21. Dispositif de marquage selon les revendications 13 à 20, caractérisé en ce que l'extrémité extérieure de la branche de travail (3) est formée comme aiguille.

22. Dispositif de marquage selon les revendications 13 à 21, caractérisé en ce que la pièce articulée de l'articulation de l'articulateur est une bille condylique (10).

23. Dispositif de marquage selon les revendications 13 à 21, caractérisé en ce que la pièce articulée de l'articulation de l'articulateur est un boîtier de condyle (7), un palier de condyle ou une cage de condyle.
